# EUROPÄISCHE PATENTSCHRIFT

(11) **EP 2 866 345 B1**
(45) Veröffentlichungstag und Bekanntmachung des Hinweises auf die Patenterteilung: **19.12.2018**
(21) Anmeldenummer: 14190108.2
(22) Anmeldetag: 23.10.2014
(51) Int. Cl.: H02S 40/12, H05B 3/84

(54) **Photovoltaikpaneel mit Flächenheizelement**
Photovoltaic panel with panel heating element
Panneau photovoltaïque avec élément de chauffage de surface

(30) Priorität: 23.10.2013 AT 506832013
(43) Veröffentlichungstag der Anmeldung: 29.04.2015
(73) Patentinhaber: ETHERMA Elektrowärme GmbH, 5302 Henndorf Am Wallersee (AT)
(72) Erfinder: Reiter, Thomas, 5201 Seekirchen (AT)
(74) Vertreter: Babeluk, Michael

(56) Entgegenhaltungen:
- DE-A1- 2 316 707
- DE-B3-102010 037 005
- DE-U1-202010 005 067
- GB-A- 911 744
- JP-A- 2000 027 378

## Beschreibung

Die Erfindung betrifft ein Photovoltaikpaneel mit Flächenheizelement gemäß dem Oberbegriff von Patentanspruch 1.

Stromerzeugung mit umweltschonender, abgasfreier erneuerbarer Energie ist ein Gebot der Stunde. Neben Wasserkraft und Windenergie ist es Photovoltaik, die kostenlos elektrische Energie liefert. Photovoltaik nutzt die direkte und die diffuse Einstrahlung durch die Sonne, wobei grundsätzlich zwei Hemmnisse bestehen. Das erste ist, dass die Stromerzeugung nur tagsüber möglich ist, und das zweite ist Schneefall und Eisbelag-Bildung.

Die vorliegende Erfindung beschäftigt sich mit der Vermeidung von Produktionsausfällen im Zusammenhang mit Photovoltaikmodulen, die durch Schnee oder Eis zugesetzt sind. Solche Produktionsausfälle sind besonders schmerzlich, da einerseits besonders im Winter ein erhöhter Strombedarf besteht und andererseits bei niedrigen Temperaturen zufolge des hohen Wirkungsgrades eine besonders hohe Ausbeute möglich ist.

Tagsüber wird durch die Eigenwärme des Photovoltaikpaneels in der Regel die Einlagerung von Schnee oder Eis verhindert. Nachts ist das Photovoltaik dann jedoch kalt und muss fremdbeheizt werden, was unter Umständen auch tagsüber erforderlich ist, wenn der Schneefall so stark ist, dass die vom Photovoltaikpaneel erzeugte Eigenwärme für eine Selbstabtauung nicht ausreicht.

Anlagen und Vorrichtungen zur Beheizung von Photovoltaikpaneelen sind beispielsweise in der DE 20 2010 005 067 U oder der GB 911 744 A offenbart. Mit diesen bekannten Lösungen ist es bei entsprechender Auslegung der Beheizung möglich, die Einlagerung von Schnee oder Eis zu verhindern.

Nachteilig bei bekannten Lösungen ist jedoch, dass durch das Aufbringen einer Heizeinrichtung auf der Rückseite des Photovoltaikpaneels auch eine Isolationswirkung erzielt wird. Diese kann zwar im Heizmodus einen gewissen Wirkungsgrad-Vorteil für die Beheizung ergeben, führt aber insbesondere im Sommer zu einer deutlichen Erhöhung der Temperatur des Photovoltaikpaneels, da bekanntermaßen der Wirkungsgrad von Solarzellen mit steigender Temperatur abnimmt. Insgesamt wird daher bei herkömmlichen Beheizungssystemen der erzielbare Nutzen durch die Wirkungsgrad-Nachteile stark verringert.

Aufgabe der vorliegenden Erfindung ist es, diese Nachteile zu vermeiden und eine Lösung anzugeben, bei der die Ausbeute bei Schneefall und Eisbildung gesteigert werden kann, ohne wesentliche Beeinträchtigungen des Wirkungsgrads bei höheren Temperaturen in Kauf nehmen zu müssen.

Erfindungsgemäß werden diese Aufgaben durch die Merkmale von Patentanspruch 1 gelöst.

Wesentlich an der vorliegenden Erfindung ist die Erkenntnis, dass durch maximale Steigerung der Wärmedurchlässigkeit und Wärmeleitfähigkeit im Bereich des Flächen-Heizelements zwei Wirkungen gleichzeitig erreicht werden können, nämlich einerseits eine deutlich bessere Verteilung der durch den Heizleiter eingebrachten Wärme, und andererseits eine bessere Wärmedurchlässigkeit über einen Großteil der Fläche des Photovoltaikpaneels. Die erste Wirkung ermöglicht es auch, einen geringeren Anteil der Fläche mit dem Heizleiter abzudecken, so dass ein größerer Anteil der Fläche für den weitgehend freien Wärmetransport zur Verfügung steht. Auf diese Weise kann die Beeinträchtigung des Wirkungsgrads bei höheren Temperaturen minimiert werden.

Bevorzugte Ausführungsvarianten der Erfindung sind Gegenstand der Unteransprüche.

In der Folge wird die vorliegende Erfindung anhand der in den Figuren dargestellten Ausführungsbeispiele näher erläutert. Es zeigen:
- Fig. 1: eine schematische Darstellung eines Photovoltaikmoduls im Schrägriss;
- Fig. 2: eine Aluminiumfolie in einer Draufsicht;
- Fig. 3: ein Photovoltaikmodul im Schnitt;
- Fig. 4: eine alternative Ausführungsvariante in einer Darstellung entsprechend Fig. 3;
- Fig. 5: bis Fig. 7 schematische Darstellungen zur Erklärung der Erfindung.

Die Regelung des erfindungsgemäßen Photovoltaikmoduls funktioniert in der Weise, dass auf der stromerzeugenden Oberfläche eine Temperatur von etwa +2°C erreicht wird. Die dafür nötige Leistung beträgt je nach Winkel der Aufstellung und den zu erwartenden Außentemperaturen etwa 80 W/m². In der Regel wird eine Anschlussleistung von etwa 120 W/m² bis 160 W/m² vorgesehen, um kurze Abtauzeiten zu erreichen.

Der typische Aufbau eines erfindungsgemäßen Flächenheizelements ist folgendermaßen:
1. Klebeschicht (zum Befestigen auf dem PV-Panel)
2. Erster Layer Alubeschichtung
3. Gewebelayer zur mechanischen Verstärkung
4. Klebeschicht
5. Heizleiter
6. Klebeschicht
7. Gewebelayer zur mechanischen Verstärkung
8. Obere Alubeschichtung

Durch diesen Aufbau werden insbesondere folgende Vorteile erzielt:
- Schnellere, homogenere Temperaturverteilung des Heizelements am PV-Paneel während des Betriebs der Heizung => schnelleres Abschmelzen des Schnees => weniger Energieverbrauch für die Abschmelzung => das PV-Paneel kann schneller wieder selbst Energie liefern bzw. erzeugen.
- Die Alufolie trägt im Sommer dazu bei, dass die durch die Sonne erzeugten PV-Paneeltemperaturen am Paneel nicht höher sind als wenn kein Heizelement darauf befestigt ist. Sind Heizelemente ohne Alufolie am Paneel fixiert, verursachen diese einen Wärmestau. Dies führt zu höheren Temperaturen am Paneel (Auch wenn die Heizung nicht eingeschalten ist). Sind die Temperaturen am Paneel höher, haben diese einen wesentlich schlechteren Wirkungsgrad. Es können in diesem Fall durch den Wärmestau über das Jahr gesehen viel weniger Energie vom PV-Paneel produziert werden.

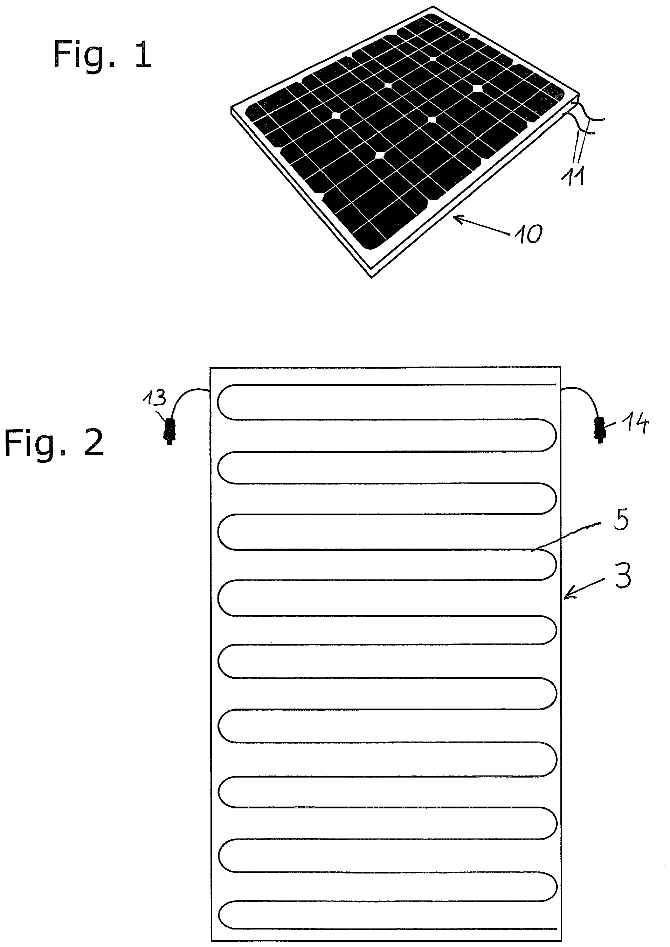

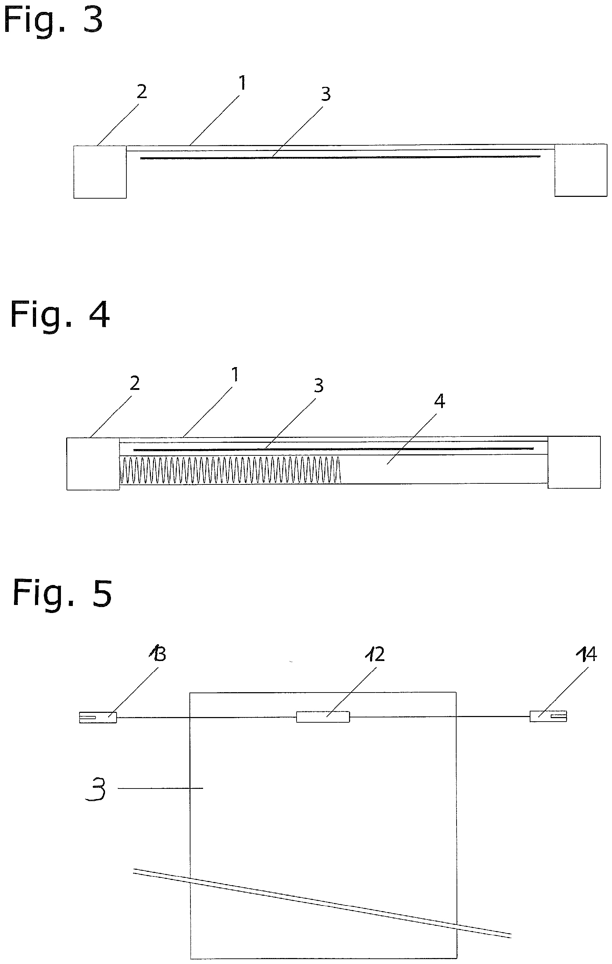

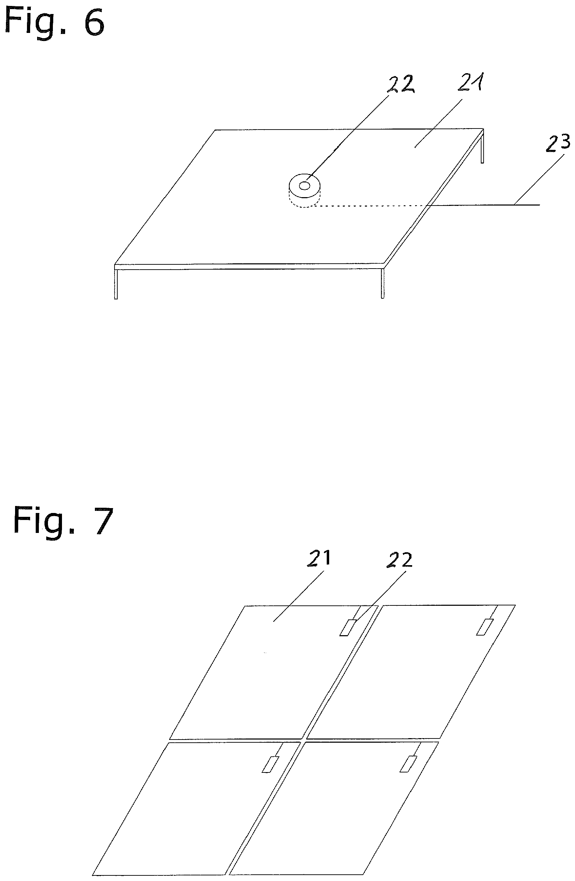

Es zeigt in Fig. 1 ein verlegefertiges Photovoltaikpaneel 10 mit den PV-Strom führenden Anschlussleitungen 11. Fig. 2 zeigt das Heizelement 3, nämlich die Heizfolie mit dem Heizleiter 5, welche an der Hinterseite des PV-Paneels 10 fest mit der stromerzeugenden Glasplatte 1 gemäß Fig. 3 klebend verbunden wird. In Fig. 4 ist dargestellt, wie eine erforderliche Wärmeisolierung 4 klebend mit der Heizfolie 3 verbunden Ist. In Fig. 5 ist die elektrische Versorgung der Heizfolie mit 230 V aus dem allgemeinen Stromnetz oder aus einer Speicherbatterie dargestellt, wobei über eine Anschlussleitung 14 der eingehende und eine Anschlussleitung 13 der für andere Paneele weitergeleitete Strom ist, der in der Schaltung 12 verteilt wird. Es zeigt Fig. 6 die Messplatte, mit der eine sinkende Temperatur und einsetzender Schneefall erfasst wird. Der Sensor 22 ist planeben in die Aluminiumplatte 21 integriert, 23 ist die Leitung, mit der die Temperaturmesswerte an ein Regelgerät PVK (Photovoltaik-Kontroll) gegeben werden. In Fig. 7 ist die Anordnung gezeigt, mit der die Oberflächentemperaturen der PV-Paneele 10 erfasst werden. Im Falle, dass diese eine Temperatur von mehr als 2°C plus haben, wird die Erwärmung durch die Heizfolien 3 unterbunden.

Bei einer Anordnung mit einem Winkel von z.B. 30° zur Horizontalen ergibt sich hier das Problem der Konvektion der erzeugten Wärme, was eine höhere Anschlussleistung der Heizfolie 3 erfordert. Es ist demnach erforderlich, eine Wärmeisolierung 4 vorzusehen (Fig. 4), welche den Temperaturverlust verhindert. Hierbei ergibt sich ein eminentes Problem und zwar die PV-Oberflächentemperatur, welche bei voller Sonnenstrahlung 120°C - 140°C erreicht. Es wird deshalb ein temperaturbeständiges Isoliermaterial verwendet, welches für diese Temperaturen beständig ist.

Ein weiteres Problem ist die Stromversorgung der PV-Paneele 10 . Erfindungsgemäß wird die Aufgabe dadurch gelöst, dass jedes Heizelement zwei Anschlussleitungen besitzt, wobei eine für die Einspeisung und die zweite für die durchgeschliffene Versorgung der weiteren PV-Paneele dient. Eine Anschlussleitung ist als Einspeiseleitung ausgeführt und besitzt eine wasserdichte Steckerkupplung. Die zweite Anschlussleitung hat einen wasserdichten Stecker, es wird somit eine sichere und dauerhafte Weiterleitung des Stromes sowie eine schnelle und rationelle Montage gewährleistet (Fig. 5). Die Versorgung der Heizfolie erfolgt durch einen direkt auf dem Heizelement verklebten wasserdichten T-Abzweig in Form einer Schaltung 12, mit der auch die Anschlussleitungen 13, 14 fest und dauerhaft verbunden sind.

Aufgabe der vorliegenden Erfindung ist ferner die Sicherheit der Wärmeübertragung und Wärmeverteilung durch das Heizelement 3 und die Beständigkeit des verwendeten Materials. Erfindungsgemäß wird eine dreipolige, nur 2 mm - 2,5 mm dünne Heizleitung bestehend aus Widerstandslitze und einer 230°C temperaturbeständigen Isolierung 4 aus PTFE auf einem Glasseidennetz mit 5 mm Rasterabstand fest verbunden. Diese Matte wird innerhalb zweier Alufolien mit 0,2 mm Stärke eingebettet verklebt und ergeben so ein kompaktes Flächenheizelement. Das sehr gut wärmeleitende Aluminium verteilt die von den Heizleitungen erzeugte Wärme flächig und überträgt diese auf das PV-Paneel.

Die Erfindung beinhaltet ferner rechtzeitige Erkennung der fallenden Außentemperatur, den Beginn eines Schneefalls sowie die Steuerung und Zuordnung der Oberflächentemperatur der PV-Paneele 10. Zu diesem Zweck ist in eine A3 große 3 mm starke Aluminiumplatte 21 ein eigen beheizter Feuchtigkeits- und Temperaturfühler eingebaut (Fig. 6), der eine sinkende Temperatur und einsetzenden Schneefall erkennt. Zusätzlich werden auf vier PV-Paneelen zusätzliche Temperaturfühler (Sensor 22) direkt auf dem Glas verklebt (Fig. 7), welche die Abtautemperatur steuern. Diese Steuerung ist mit einem Empfänger ausgestattet, der die Ein- und Ausschaltung per Funk, per Mobiltelefon und digitaler Haussteuerung erlaubt.

## Patentansprüche

1. Photovoltaikpaneel (10) mit einem Flächenheizelement zur Beheizung, bei dem ein elektrischer Heizleiter (5) dauerhaft in dem Flächenheizelement integriert ist, **dadurch gekennzeichnet, dass** das Heizelement (3) zwischen zwei Schichten aus Aluminium eingebettet ist, wobei die beiden Schichten aus Aluminium und der Heizleiter (5) verklebt sind, wobei der Klebstoff vorzugsweise eine Temperaturbeständigkeit von mehr als 180°C aufweist und wobei zwischen den beiden Schichten aus Aluminium mindestens eine Gewebeschicht zur Verstärkung vorgesehen ist.

2. Photovoltaikpaneel (10) nach Anspruch 1, **dadurch gekennzeichnet, dass** eine der beiden Schichten aus Aluminium an der Außenseite eine Klebeschicht zur Befestigung des Heizleiters (5) aufweist.

3. Photovoltaikpaneel (10) nach einem der Ansprüche 1 oder 2, **dadurch gekennzeichnet, dass** eine der beiden Schichten aus Aluminium an der Außenseite eine Klebeschicht zur Befestigung aufweist.

4. Photovoltaikpaneel (10) nach einem der Ansprüche 1 bis 3, **dadurch gekennzeichnet, dass** zwischen den beiden Schichten aus Aluminium Anschlussleitungen und oder Temperaturfühler integriert sind.

5. Photovoltaikpaneel (10) nach einem der Ansprüche 1 bis 4, **dadurch gekennzeichnet, dass** der Heizleiter (5) aus einer Widerstandslitze und einer hochtemperaturbeständigen Isolierung aus PTFE besteht.

6. Photovoltaikpaneel (10) nach einem der Ansprüche 1 bis 5, **dadurch gekennzeichnet, dass** eine Steuerungseinheit vorgesehen ist, die einen eigen beheizten Temperaturfühler (22) aufweist.

7. Photovoltaikpaneel (10) nach Anspruch 6, **dadurch gekennzeichnet, dass** die Steuerungseinheit auch einen Feuchtesensor aufweist.

8. Photovoltaikpaneel (10) nach einem der Ansprüche 1 bis 7, **dadurch gekennzeichnet, dass** zusätzlich Temperaturfühler (22) vorgesehen sind, die auf das Photovoltaikpaneel (10) aufgeklebt sind.

9. Anordnung von Photovoltaikpaneelen (10) nach einem der Ansprüche 1 bis 8, **dadurch gekennzeichnet, dass** die Heizleiter (5) der einzelnen Photovoltaikpaneele (10) in Serie geschaltet sind.

10. Anordnung von Photovoltaikpaneelen (10) nach einem der Ansprüche 1 bis 8, **dadurch gekennzeichnet, dass** eine gemeinsame Steuerungseinrichtung für die mehreren Photovoltaikpaneele (10) vorgesehen ist.

## Claims

1. Photovoltaic panel (10) having a surface heating element for heating, in which an electrical heating conductor (5) is permanently integrated in the surface heating element, **characterised in that** the heating element (3) is embedded between two layers of aluminium, wherein the two layers of aluminium and the heating conductor (5) are adhesively bonded, wherein the adhesive preferably has a temperature resistance of more than 180°C, and wherein at least one fabric layer is provided for reinforcement between the two layers of aluminium.

2. Photovoltaic panel (10) according to claim 1, **characterised in that** one of the two layers of aluminium has on the outside an adhesive layer for fastening the heating conductor (5).

3. Photovoltaic panel (10) according to one of claims 1 or 2, **characterised in that** one of the two layers of aluminium has on the outside an adhesive layer for fastening.

4. Photovoltaic panel (10) according to one of claims 1 to 3, **characterised in that** connecting lines and/or temperature sensors are integrated between the two layers of aluminium.

5. Photovoltaic panel (10) according to one of claims 1 to 4, **characterised in that** the heating conductor (5) consists of a resistance strand and a high-temperature-resistant insulation made of PTFE.

6. Photovoltaic panel (10) according to one of claims 1 to 5, **characterised in that** a control unit is provided which has its own heated temperature sensor (22).

7. Photovoltaic panel (10) according to claim 6, **characterised in that** the control unit also comprises a humidity sensor.

8. Photovoltaic panel (10) according to one of claims 1 to 7, **characterised in that** additionally temperature sensors (22) are provided which are glued onto the photovoltaic panel (10).

9. Arrangement of photovoltaic panels (10) according to one of claims 1 to 8, **characterised in that** the heating conductors (5) of the individual photovoltaic panels (10) are connected in series.

10. Arrangement of photovoltaic panels (10) according to one of claims 1 to 8, **characterised in that** a common control device is provided for the plurality of photovoltaic panels (10).

## Revendications

1. Panneau photovoltaïque (10) comprenant un élément chauffant de surface destiné à permettre un chauffage, dans lequel un conducteur électrique chauffant (5) est intégré en permanence dans l'élément chauffant de surface,
**caractérisé en ce que**
l'élément chauffant (3) est noyé entre deux couches d'aluminium, les deux couches d'aluminium et le conducteur chauffant (5) étant collés, la colle ayant de préférence une résistance à une température supérieure à 180°C, et, entre les deux couches d'aluminium au moins une couche de tissu étant prévue pour permettre un renfort.

2. Panneau photovoltaïque (10) conforme à la revendication 1,
**caractérisé en ce que**
l'une des deux couches d'aluminium comporte, sur sa face externe, une couche de colle pour permettre de fixer le conducteur chauffant (5).

3. Panneau photovoltaïque (10) conforme à l'une des revendications 1 et 2,
**caractérisé en ce que**
l'une des deux couches d'aluminium comporte une couche de colle sur sa face externe pour permettre sa fixation.

4. Panneau photovoltaïque (10) conforme à l'une des revendications 1 à 3,
**caractérisé en ce qu'**
entre les deux couches d'aluminium sont intégrés des conducteurs de connexion et/ou des palpeurs de température.

5. Panneau photovoltaïque (10) conforme à l'une des revendications 1 à 4,
**caractérisé en ce que**
le conducteur chauffant (5) est constitué d'une résistance torsadée et d'une isolation résistant à une température élevée en PTFE.

6. Panneau photovoltaïque (10) conforme à l'une des revendications 1 à 5,
**caractérisé en ce qu'**
il est prévu une unité de commande qui comporte un palpeur de température chauffé propre (22).

7. Panneau photovoltaïque (10) conforme à la revendication 6,
**caractérisé en ce que**
l'unité de commande comporte également un capteur d'humidité.

8. Panneau photovoltaïque (10) conforme à l'une des revendications 1 à 7,
**caractérisé en ce qu'**
il est prévu des palpeurs de température supplémentaires (22) qui sont collés sur le panneau photovoltaïque (10).

9. Agencement de panneaux photovoltaïques (10) conforme à l'une des revendications 1 à 8,
**caractérisé en ce que**
les conducteurs chauffants (5) des différents panneaux photovoltaïques (10) sont branchés en série.

10. Agencement de panneau photovoltaïque (10) conforme à l'une des revendications 1 à 8,
**caractérisé en ce qu'**
il est prévu un dispositif de commande commun à tous les panneaux photovoltaïques (10).
